# EUROPEAN PATENT SPECIFICATION

(11) **EP 0 795 150 B1**
(45) Date of publication and mention of the grant of the patent: **27.03.2002**
(21) Application number: 95939446.1
(22) Date of filing: 21.11.1995
(51) Int. Cl.: G06F 1/00, G06F 12/14

(54) **A METHOD FOR CONTROLLING ACCESS TO A DATA BASE, A DATA BASE AND A COMPUTER NETWORK USING THE SAME**
DATEIZUGRIFFSTEUERUNGSVERFAHREN, EINE DATEI UND EIN RECHNERNETZWERK UNTER VERWENDUNG DESSELBEN
PROCEDE DE GESTION D'ACCES A UNE BASE DE DONNEES, BASE DE DONNEES ET RESEAU INFORMATIQUE L'UTILISANT

(30) Priority: 29.11.1994 SE 9404156
(43) Date of publication of application: 17.09.1997
(73) Proprietor: TELIA AB, 123 86 Farsta (SE)
(72) Inventor: BIGGE, Peter, S-114 54 Stockholm (SE)
(74) Representative: Akerman, Marten Lennart
(86) International application number: SE9501384
(87) International publication number: WO9617285

(56) References cited:
- EP-A- 0 447 339
- EP-A- 0 501 475
- 1988 IEEE SYMPOSIUM ON SECURITY AND PRIVACY, April 1988, STEPHEN T. VINTER, "Extended Discretionary Access Controls", pages 39-49.
- COMPUTER COMMUNICATIONS, Volume 13, November 1990, JONATHAN MOFFETT, MORRIS et al., "Specifying Discretionary Access Control Policy for Distributed Systems", pages 571-580.

## Description

The present invention relates to an improved log-in procedure for use with data bases having a single level of administration security, data bases for use with such a procedure and computer networks on which such databases may be operated.

Administration of large data bases with large numbers of users has a number of problems associated with operation of the data base. Consider a data base which:
- uses a single file server as a platform;
- has a large number of users, of the order of 20,000, half of which are simultaneously logged on to the system;
- has a single level of administration security;
- operates various data base procedures each of which may include some functions denied to certain users; and
- contains data on various subjects, having diverse security ratings, some of which may only be available to a subset of data base users.

Users of such a data base will normally have a need to use several data base applications in parallel. Users may have restricted access rights as between different data base subjects, or even within a subject. For example, a given user may be allowed access to telephone number lists for the Stockholm area, but be denied access to data on financial ledgers. Certain telephone numbers may be regarded as secret and access to such numbers may be denied to all except a few users. If there is only a single level of administration available, the system administrator role is the only means by which new identities can be created. Unfortunately, this role is able to access all information on the system, erase portions of the data, or even the entire data base, or even switch off the file server on which the data base is stored. The problem of controlling access to such a data base, without imposing an excessive computational load on a file server and, thereby seriously slowing down its speed of operation, is by no means easy to solve.

In order to achieve this, the access rights of each of some 20,000 users must be broken down:
- by class of subject matter;
- within subject matter classes, by secret data; and
- by data base operation.

During the performance of a given data base task for a given user, different access rights may come into play.

If effective data base security is to be preserved, it is vital that all data base access rules be held on the file server. If such rules were held on client controlled equipment they could be subverted by a dishonest client.

It has been proposed that management of client identities and access rights be controlled in front of the file server. Such front-end based systems establish a number of parallel connections in relation to general identity. This creates overhead problems, performance problems and log-in problems for the file server.

Where a data base can be accessed by a small number of users only, from ten to a few hundred, a number of small fixed groups of users may be established and identities associated with these groups. This solution is not viable where large numbers of users are involved.

EP 501 475 discloses a distributed data system in which processes running in trusted systems whose results may be proprietary or sensitive in nature may be invoked by operators at remote, untrusted workstations. Said processes are provided with locks which do not permit proprietary or sensitive actions unless a request includes a key matching the lock. A method of associating keys with operators is based on each operator's presenting his ID and a valid password at the workstation at the time he logs on to the system, verifying his password in a trusted system, correlating his ID with a role or group of roles he is authorized to fulfill, and retrieving and storing in the memory of the trusted system, associated with the operator's ID, a list of keys (a "keyring") for each of those roles. The operator's ID is appended to every request he invokes, a process containing a lock interrogates the stored list and will not grant a proprietary action unless the stored list contains a key matching the lock.

The present invention solves the problem of access control in a large data base with a large number of users by the use of a double log-in technique. Each data base client may have a number of individual users. Each application recorded for a given client has its own unique identity. To log-in to the data base, a user enters his identity and password, or PIN (personal identity number). Only a few functions and a limited amount of data can be accessed directly on a primary log-in. However, a secondary log-in is then carried out, concealed from the user. The user only knows his identity and PIN. On requesting a particular application, an application identity is generated from the users identity and application name, for which a randomly generated PIN is generated. This identity is then given the rights to perform all necessary functions for the application in question subject to any access limitations imposed on the user with regard to the application in question.

It should be noted that with a data base, of the type to which this invention relates, which is subject to heavy user demands, it may be advantageous to inhibit command mode operation in real time. None-the-less, the present invsntion may still be applicable to data base systems which can be operated in command mode.

According to a first aspect of the present invention, there is provided a data base stored on a first file server, to which a large number of individual users have access, in which there exists a single level of administration and in which limitations on, user rights are imposed with regard to both data and data base functions characterised in that said data base is accessible by a double log-in procedure in which a user enters his identity and password and, for each database application run by said user, said first file server being devised to generates an application/user identity specific to said user and said application together with an associated password, means for concealing said application/user identity and said associated password from said user, said first file server comprising means for deriving a list of access rights to be associated with said application/user identity by running, on said first file server, a procedure prepared on a second file server.

Said application/user identity, said associated password and said list of access rights may be in cache memory on said first file server.

Each user may have a defined role for each of a selected number of data base applications, which role permits said user to perform only certain functions defined for that application.

According to a second aspect of the present invention there is provided a computer network having a central processing means, including a first file server on which is stored a data base, a second file server for the preparation of database applications and procedures, and a plurality of terminal equipment through which said data base can be accessed, characterised in that user rights, for said data base, are uniquely tailored to each user with regard to both data and data base functions, in that access to said data base is controlled by a double log-in procedure, and in that a first step of the double log-in procedure is effected by a user entering a user identity and password, and in that for each database application run by said user, means are provided, associated with said first file server, for generating an application/user identity specific to said user and said application together with an associated password, and in that both said application user identity and said password are concealed from said user, and in that the computer network includes second means for giving said application/user identity access rights to perform necessary functions of the particular application in dependence of the access rights of said user.

Preferably said application/user identity, said associated password and said list of access rights are stored in cache memory on said first file server.

The computer network may include third means for accessing said cache memory each time a logged-in user attempts a new task, and for determining whether, or not, a particular data base function, or data, can be made available to said new task.

According to a third aspect of the present invention, a method for a computer network having a central processing means including a first file server on which a database is stored, a second file server for the preparation of database applications and procedures and a plurality of terminal equipment through which said data base can be accessed, said method controlling access to said data base and, characterised in that user rights, for said data base, are uniquely tailored to each user with regard to both data and data base functions, and in that as a first step of logging in to said data base, a user enters a user identity and a password, and for each database application run by said user, said first file server generates an application/user identity specific to said user and said application together with an associated password, and in that both said application/user identity and password are concealed from said user, and in that a list of access rights to be associated with said application/user identity are derived by running, on said first file server, a procedure prepared on said second file server.

Embodiments of the invention will now be described, by way of example, with reference to the accompanying drawings in which:
Figure 1 illustrates the relationship established between user identities, roles and applications in a data base according to the present invention.
Figure 2 illustrates how a defined role determines the access rights of a given user to a given application on a database according to the present invention.
Figure 3 shows a signal chart for an embodiment of the present invention operating on a SQL file server.
Figure 4 illustrates, in diagrammatic form, an example of a platform on which a data base according to the present invention may be run.

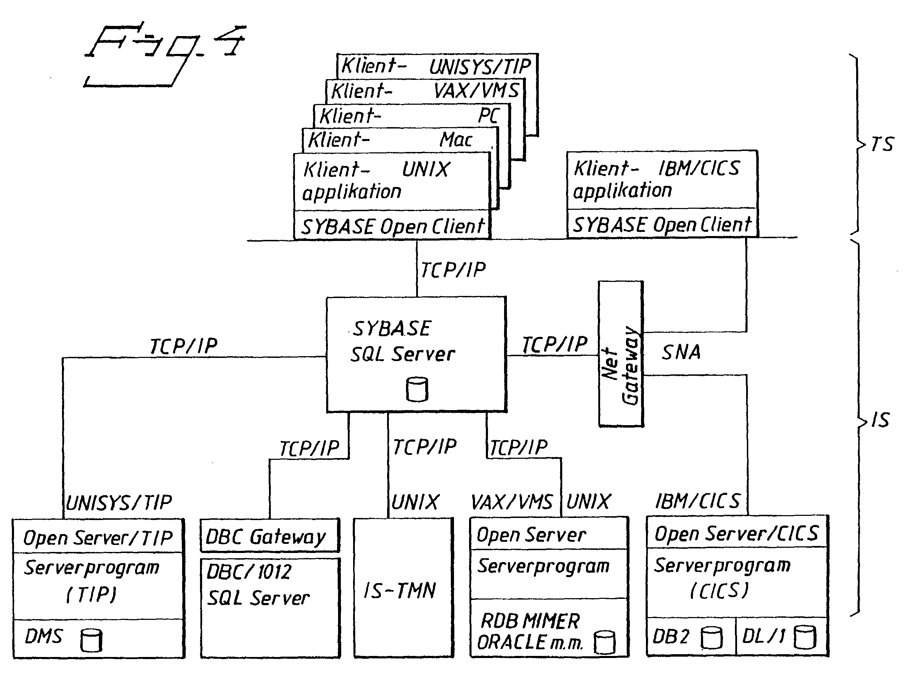

An example of a computer network platform on which the present invention can be realised is illustrated in Figure 4. The operation of such a platform will be immediately apparent, to those skilled in the art, from a brief examination of Figure 4. However, it should be noted that a plurality of terminals using a variety of operating systems, collectively referred to as the application system TS, can be connected to a central file server, the SQL server, by means of Sybase communications software which is herein referred to as Open Client. A variety of systems, referred to as Open Servers, may be used for preparing data base procedures and applications. The Open Servers again communicate with the central server by means of Sybase communications software. The central SQL server carries all the data which comprises the data base, and operates on SQL procedure language. That portion of the computer network which includes the central SQL server and the Open Servers is collectively referred to as the information system, IS. The open servers and applications system may use a variety of operating systems and software, including UNISYS®/TIP®, VAX®/VMS®, PC, MAC, UNIX®, and IBM®/CICS®.

In the operation of a data base, different roles can be identified. In a simple database, there exist two roles, that of system administrator and that of a user who wishes to access data. However, in a very large database, of the type that may be needed to support the operations of a telecommunications network operator, there may be a need for many users to perform data base applications which involve, in addition to reading data, amending data on the data base, deleting data on the database, or creating new data operations of creating, reading, updating and deleting data are frequently referred to by their initial letters as CRUD.

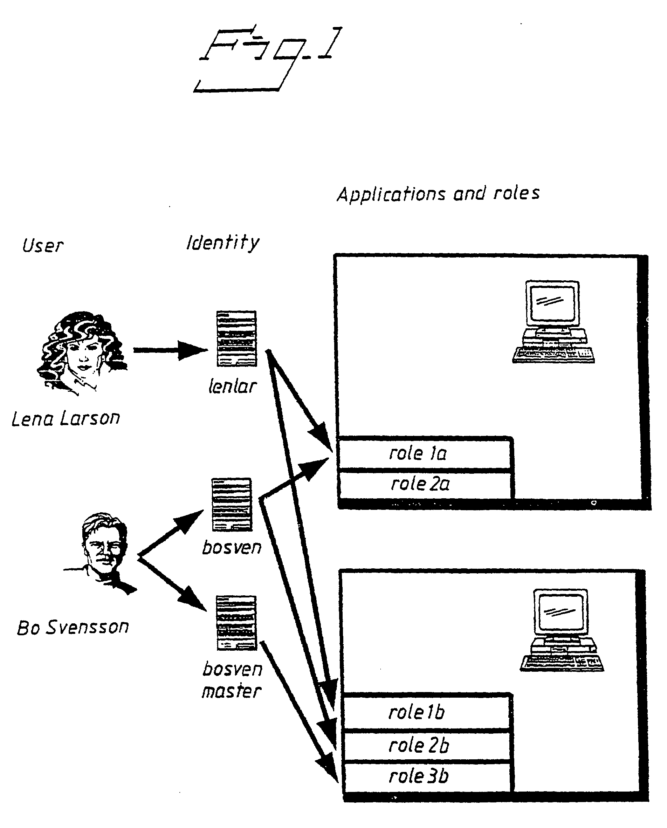

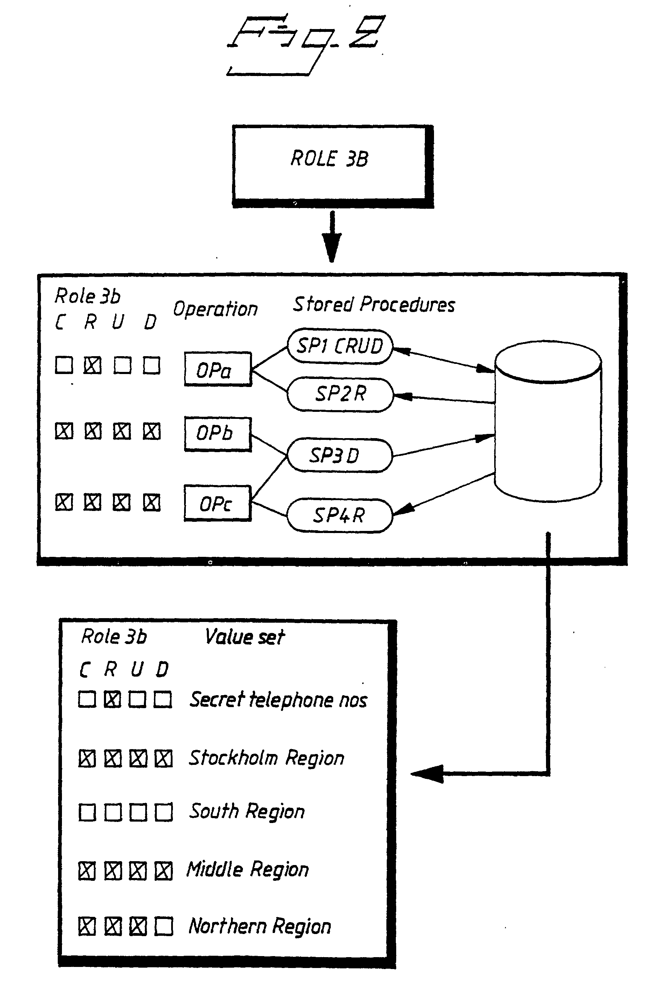

The relationship between a user, a user identity, a role and an application is illustrated in schematic form in Figures 1 and 2. Consider two individual users, of the very large number of total users of the database, perhaps as many as 10,000, called Lena Larson and Bo Svensson. Lena's system identity is "lenlar", and it is unique to her, Bo's computer identity is "bosven" and it is again unique to him. In addition, Bo has a second computer identity, "bosvem-master", which he uses only when accessing certain secret data for which he has special authority to access. For each identity there exists a secret password known only to the user. By entering their computer names and passwords, Bo and Lena get very limited access to the SQL file server.

To obtain the ability to run an application on the SQL file server, a further log-in procedure is performed automatically by the SQL file server. This will be described later. Of the many applications that can be run on the SQL file server, two are referred to, in the drawings, as application A and application B. For each of these applications a number of different roles can be defined, e.g. roles 1, 2 and 3. Performance of a given application may involve a number of separate data base procedures, accessed, for example, via a menu.

Consider role 3B, that is to say role 3 performed in respect of application B. It is assumed that this application involves three operations OPa, OPb, and OPc. These three operations each use a different set of stored procedures SP1 .... SP4. Each of these procedures involves a number of basic data base functions, e.g. SP1 requires the create, read, update and delete functions, while SP3 involves only the delete function. By applying role 3 to application B which operates on data relating to telephone numbers, a series of actions and access rights are defined. For example, role 3B, which is only available to Bo when using the computer identity "bosvem-master", enables secret telephone numbers to be read, but not created, updated, or deleted. By way of contrast, role 3B enables telephone numbers for Northern Region to be created, read and updated, but not deleted.

In use, users, such as Lena and Bo have to be registered on the open file server. This process can only be performed by the system administrator role. In order to register a user, the system administrator enters his/her personal information such as name, organisation, and telephone number, and creates a basic, or computer, identity for the user e.g. lenlar. In addition, the system administrator assigns each user a password, which the user will have to change to a secret password on first logging in to the system. Each computer identity is assigned a run time which indicates the time of day when that user is permitted to use the system.

To set up access rights for a user, the system administrator has to associate a number of roles with each data base application that the user is allowed to access. As explained above, the roles define precisely what access rights a particularly user has when running a given data base application. A given individual may be assigned more than one computer identity each of which has different roles associated with it. This is advantageous when a single user may need to operate on data having different security classifications and assists in the construction of audit trails.

Access to the data base held on the information system, see Figure 4, is achieved by means of stored procedures. These procedures can create, read, update and/or delete data on the information system. In a given application, a number of operations are defined. An operation is the basic functionality seen by a user. Operations are usually selected from a menu of alternatives, or selected by operation of a specially assigned terminal key. Running a given operation either initiates a dialogue with the IS, or achieves the performance of a task in the IS. Each operation uses at least one stored procedure. These procedures are stored on the open file server. When a role is defined for an application it determines what a user who is assigned that role can do when running that application. If, for example, a user is permitted to open a dialogue with the IS, but only read the contents of stored data, this is indicated by "R", see Figure 2. Thus, for operation OPa, a user assigned role 3B is permitted to run procedures which only entail reading data, i.e. SP2. On the other hand, the user is not permitted to run procedure SP1, because this procedure requires the ability to create, read, update and delete, and role 3B is denied the right to create, update and delete within this application.

A value set is a set of criteria by which data objects are grouped. For example, all telephone subscribers in the Stockholm region represent a value set. When a role is defined, the definition includes the value sets which a user assigned that role is permitted to access, and what basic data base functions that role is permitted in respect of that value set.

In real time operation, the open server must deal with many users and the information has to be protected from unauthorised access yet be available to those who are authorised to use it. The definition of different roles enables users to be given varied access rights, depending on their particular needs. Equally, it is possible to arrange for a hierarchy of system administrators, by defining different system administration roles. In this way it is possible to have a large number of system administrators with only a few having unlimited access rights to the system, the majority having limited rights.

The totality of system users can be divided into client groups, each client representing a department, or external organisation. The use of varied administration roles can, with advantage, be implemented in a client-user hierarchy, by creating a system administrator for each client grouping with access rights limited to the needs of the client. Any changes needed to that clients overall access rights can then be achieved by a variation of the client-administrator's access rights, which must be made by one of the few central administrators. Subsequent changes to the individual user rights of users belonging to that client grouping can be implemented by the client-administrator.

The majority of system administrators thus have limited access rights, and this can be shown by the use of menus, or screen buttons, in which certain menu selections, or buttons, are faded, corresponding to menu operations denied a particular system administrator. The principle reason for showing all menu options, whether available to a particular system administrator, or not, is that it enables a common set of instruction manuals and other literature to be prepared for the system. Such documentation must, of course describe maximum functionality. Of course, it is not only system operations that may be denied to a "junior" system administrator, but also certain value sets. In other words the information that a client based administrator may access can be limited to those value sets which the client is entitled to access.

In the above description of the relationship of identities, users, roles, clients, applications, value sets and system administrators, the emphasis has been on the concepts and functionality of the system, rather than on the physical means by which that functionality is created. In general, in a system of the type described, functionality is created by means of software, i.e computer programs, data base procedures, or the like. It is, of course, possible for functionality to be created by hardware elements, or means, although except in a few cases it is not cost effective to do this. The nature of the inventions described in this specification is such that the inventive concepts reside in the methods and functionality that underlies the software. From the point of view of a practical realisation of the invention it matters little whether a "means" for performing a particular function is a logical entity, created by a computer program, or a physical entity, created by a manufacturing process.

The invention(s) herein described relate to improvements in real products and have a real and significant effect on product performance.

In general, the "means" described in this specification can readily be realised by a skilled computer programmer, familiar with modern programming techniques, from the functional/conceptual description herein provided.

The distinct and practical real world advantages of the user-role-application concept described above, together with the concept of a hierarchy of system administrators, are that they enable massive data bases, with large numbers of interactive system users, to be managed in a manner which preserves system integrity and data security. It enables the system to operate at substantially greater speeds and with a substantially reduced processing overhead than is the case with other known systems.

As explained above, an individual user is assigned access rights on the basis of the roles he is permitted to perform in different applications. It would, in theory, be possible to provide each user with a plurality of computer identities and passwords, one for each application he is entitled to use. This is, of course, impractical, especially when considered in relation to control access to different value sets. The present invention overcomes this problem by using a double log-in procedure.

Consider a particular user called Anders Svensson, he has a computer identity, known to himself, called "andsve" and a secret password which only he knows "pende101". There is only a very limited amount of information on the file server that can be accessed, or changed, by the computer identity "andsve" using a general program such as Excel Q+E. However, the double log-in procedure give access to a much wider range of data, on an application-by-application basis. The double log-in procedure automatically generates, within the file server, a plurality of computer identities linked to "andsve", together with associated passwords, one for each application that "andsve" is permitted to access. These user/application identities are not visible to the Anders Svensson, and he is not permitted access to them. The only log-in identity and password known to Anders Svensson is "andsve" and "pende101". The log-in procedure can be written in procedure language as:
Login(andsve,pende101)
Ecex Fcs_get_password_for_application-identity
logout(andsve)
login ( andsve#APPLICATION),
password_for_application-identity
....Normal function calls from client
logout(andsve#APPLICATION)

The application specific identity is composed of the identity known to the user, "andsve", and a code of eight characters for the client separated with a "#", (other separators could of course be used). Fcn_get_password_for_application-identity creates an application specific identity with a randomly generated password. This identity is given rights to perform all necessary functions in dependence on the rights of the user in this particular application.

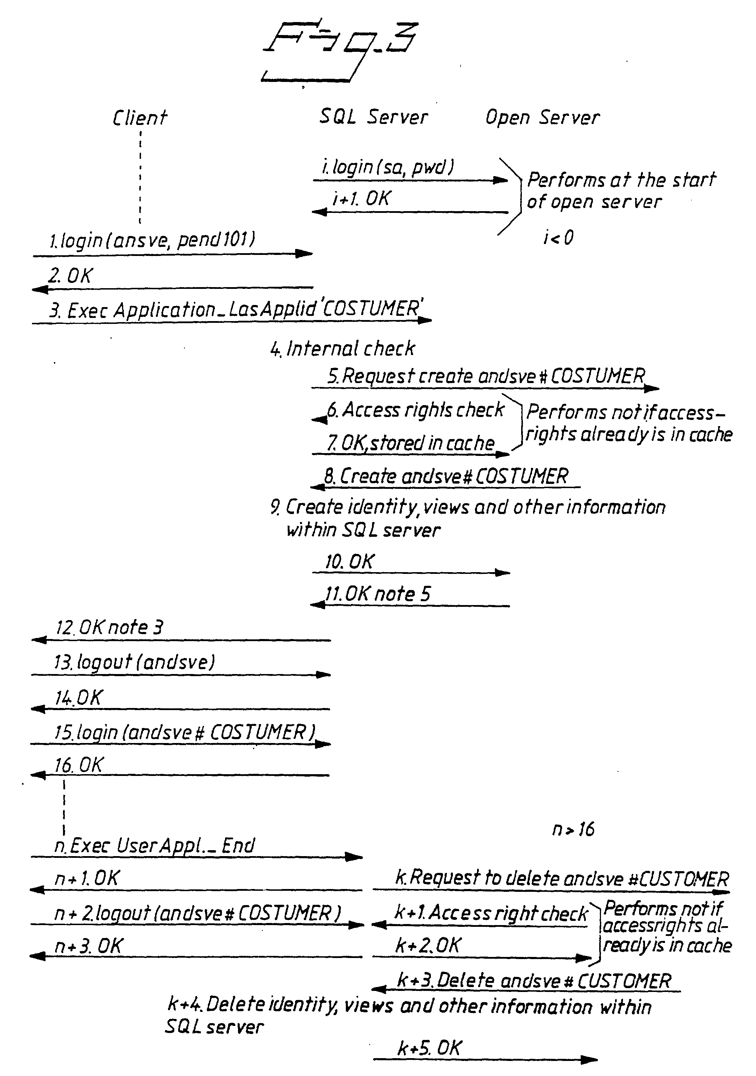

A full signal chart for the operation of the log-in is shown in Figure 3. In the example, illustrated by Figure 3, the basic, or computer identity "andsve", password "pend101", and the application code CUSTOMER are used. Note that all error handling has been omitted and that only parts of the messages of the log-in and log-out sequences are indicated. Descriptions in italic mean that the system administrator role is used, otherwise "andsve" and "andsve#CUSTOMER" are used. Brief notes on some of the signals shown in the signal chart are set out below. However, for most steps Figure 3 is self explanatory.

Instructions i, i+1, see Figure 3, are executed once at the start of the open server.

3:- Application_LasApplid(?) initiates the creation of an application specific identity. Note that all parameters are not described in the signal chart.

4:- Check that the user is defined for the indicated application, that current time is within the users allocated run time, and that there are no restrictions on the identity, or application, etc.

6, 7:- There is a general code for access control in the open server. A check is performed back into the SQL server which verifies that the user is allowed to call. In order to reduce the access time (from about 0.3 seconds to < 1ms) the information is then saved in a cache memory in the open server. This cache is cleared out only when a change in the access right is introduced.

8:- The call is made with the system administrator identity, to which the open server has access. There is no possibility of the user discovering this identity and thereby gaining a higher level access than the one for which he is authorised.

9:- The identity is created and information needed to generate views of the value sets are built together with other information in the SQL server.

11:- Again "andsve" is the identity for the signal.

12:- The result of the function called at step 3 contains the randomly generated password for andsve#CUSTOMER. It is constituted by 28 characters [32 ....255], which in addition have been DES encrypted with the password for "andsve" as key. The fulfilment of step 3 is noted to the client by an OK message.

The remaining steps in the signal chart, illustrated in Figure 3, show the identity "andsve" being logged-out, the identity "andsve#CUSTOMER" being logged-in, the execution of the called application, "CUSTOMER", and the log-out of the identity "andsve#CUSTOMER" on completion of the application "CUSTOMER".

It should be noted that the identity "andsve#CUSTOMER" contains information on both the user and the client group to which he belongs. This form of identity is a useful aid in the derivation of audit trails, statistics and debiting etc.. In comparison, prior art systems using front-end log-in control only permit breakdowns using a single common identity, management information can be derived on a user-by-application basis. For example it is possible to enable a user to obtain the answer time of the SQL server for the application he is running.

## Claims

1. A data base stored on a first server (SQL Server), to which a large number of individual users (Client) have access, in which there exists a single level of administration and in which limitations on user rights are imposed with regard to both data and data base functions, **characterised in that** said data base is accessible by a double log-in procedure in which a user enters his identity and password and, for each database application run by said user, said first file server being devised to generate an application/user identity specific to said user and said application together with an associated password, means for concealing said application/user identity and said associated password from said user, said first file server comprising means for deriving a list of access rights to be associated with said application/user identity by running, on said first file server, a procedure prepared on a second file server (Open Server).

2. A data base as claimed in claim 1, **characterised in that** said application/user identity, said associated password and said list of access rights are stored in cache memory on said first file server.

3. A data base as claimed in claim 2, **characterised by** means for, each time a logged-in user attempts a new task, accessing the content of said cache memory to determine whether or not a particular data base function, or data, can be made available to said new task.

4. A data base as claimed in any of claims 1 to 3, **characterised in** each user having a defined role for each of a selected number of data base applications, which role permits said user to perform only certain functions defined for that application.

5. A data base as claimed in any of claims 1 to 4, **characterised in that** only means at a central system administration level for said data base are devised to define a new user identity and password.

6. A data base as claimed in claim 5, **characterised by** means for generating said application/user identity for each role assigned to a user, whereby certain roles may include, in respect of certain data base applications only, access rights which are, in normal operation of the database, reserved to the system administration level.

7. A data base as claimed in any previous claim, **characterised in** said database being devised to use SQL as procedural language.

8. A data base as claimed in any previous claim, **characterised by** means for inhibiting command operation.

9. A data base as claimed in any previous claim, **characterised in that** said first and second file servers are logically distinct entities operating on the same physical equipment.

10. A data base as claimed in any previous claim, **characterised in that** said first and second file servers run on physically distinct equipment.

11. A computer network having a central processing means, including a first file server (SQL Server) on which is stored a data base, a second file server (Open Server) for the preparation of database applications and procedures, and a plurality of terminal equipment (Client) through which said data base can be accessed, **characterised in that** user rights, for said data base, are uniquely tailored to each user with regard to both data and data base functions, **in that** access to said data base is controlled by a double log-in procedure, and **in that** a first step of the double log-in procedure is effected by a user entering a user identity and password, and **in that** for each database application run by said user, means are provided, associated with said first file server, for generating an application/user identity specific to said user and said application together with an associated password, and **in that** both said application user identity and said password are concealed from said user, and **in that** the computer network includes second means for giving said application/user identity access rights to perform necessary functions of the particular application in dependence of the access rights of said user.

12. A computer network as claimed in claim 1, **characterised in that** said application/user identity, said associated password and said list of access rights are stored in cache memory on said first file server.

13. A computer network as claimed in claim 12, **characterised in that** the computer network includes third means for accessing said cache memory each time a logged-in user attempts a new task, and for determining whether, or not, a particular data base function, or data, can be made available to said new task.

14. A computer network as claimed in any of claims 11 to 13, **characterised in that** only means at a central system administration level for said data base, are devised to define a new user identity and password.

15. A computer network as claimed in claim 14, **characterised by** means for generating said application/user identity for each role assigned to a user, whereby certain roles may include, in respect of certain data base applications only, access rights which are, in normal operation of the database, reserved to a system administration level.

16. A computer network as claimed in any of claims 11 to 15, **characterised in that** all rules and procedures relating to system access are stored on said first file server.

17. A computer network as claimed in any of claims 11 to 16, **characterised by** means for inhibiting command operation.

18. A computer network as claimed in any of claims 11 to 17, **characterised in that** first and second file servers are logically distinct entities operating on the same physical equipment.

19. A computer network as claimed in any of claim 11 to 18, **characterised in that** said first and second file servers run on physically distinct equipment's.

20. A method for a computer network having a central processing means including a first file server (SQL Server) on which a database is stored, a second file server (Open Server) for the preparation of database applications and procedures and a plurality of terminal equipment (Client) through which said data base can be accessed, said method controlling access to said database and, **characterised in that** user rights, for said data base are uniquely tailored to each user with regard to both data and database functions, and **in that** as a first step of logging in to said data base, a user enters a user identity and a password, and for each database application run by said user, said first file server generates an application/user identity specific to said user and said application together with an associated password, and **in that** both said application/user identity and password are concealed from said user, and **in that** a list of access rights to be associated with said application/user identity are derived by running, on said first file server, a procedure prepared on said second file server.

21. A method as claimed in claim 20, **characterised in that** said application/user identity, said associated password and said list of access rights are stored in cache memory on said first file server.

22. A method as claimed in claim 21, **characterised in that** each time a logged-in user attempts a new task, the content of said cache memory is accessed to determine whether, or not, a particular data base function, or data, can be made available to said new task.

23. A method as claimed in any of claims 20 to 22, **characterised in that** a new user identity and password can be defined only at a central system administration level for said data base.

24. A method as claimed in claim 23, **characterised in that** said application/user identity is generated for each role assigned to a user and certain roles may include, in respect of certain data base applications only, access rights which are, in normal operation of the database reserved to a system administration level.

25. A method as claimed in any of claims 20 to 24, **characterised in that** all rules and procedures relating to system access are stored on said first file server .

## Patentansprüche

1. Datenbank, die in einem ersten Server (SQL-Server) gespeichert ist und zu der eine große Anzahl von individuellen Nutzern (Klient) Zugriff haben, in der eine einzige Administrationsebene vorhanden ist und in der Begrenzungen von Nutzerrechten bezüglich der Daten und der Datenbankfunktionen auferlegt werden,
**dadurch gekennzeichnet, daß** die Datenbank durch einen doppelten Einlogg-Prozeß zugänglich ist, bei dem ein Nutzer seine Identität und sein Paßwort eingibt, und wobei für jede von dem Nutzer durchgeführte DatenbankAnwendung der erste Dateiserver so eingerichtet ist, daß er eine für den Nutzer und die Anwendung spezifische Anwendungs-Nutzer-Identität zusammen mit einem zugeordneten Paßwort generiert, Mittel zum Verbergen der Anwendungs-Nutzer-Identität und des zugeordneten Paßworts vor dem Nutzer, wobei der erste Dateiserver Mittel aufweist zum Ableiten einer Liste von der Anwendung/Nutzer-Identität zuzuordnenen Zugriffsrechten, indem auf dem ersten Dateiserver eine auf einem zweiten Dateiserver (Open server) vorbereitete Prozedur durchgeführt wird.

2. Datenbank nach Anspruch 1,
**dadurch gekennzeichnet, daß** die Anwendungs/Nutzer-Identität, das zugeordnete Paßwort und die Liste von Zugriffsrechten in einem Cache-Speicher in dem ersten Dateiserver gespeichert werden.

3. Datenbasis nach Anspruch 2,
**gekennzeichnet durch** Mittel, um jedesmal dann, wenn ein eingeloggter Nutzer eine neue Aufgabe unternimmt, auf den Inhalt des Cache-Speichers zuzugreifen, um festzustellen, ob eine bestimmte Datenbankfunktion, oder Daten, für die neue Aufgabe verfügbar gemacht werden können.

4. Datenbank nach Ansprüchen 1 bis 3,
**dadurch gekennzeichnet, daß** jeder Nutzer eine definierte Rolle für jede aus einer ausgewählten Anzahl von Datenbankanwendungen hat, wobei die Rolle es dem Nutzer gestattet, nur bestimmte, für diese Anwendung definierte Funktionen durchzuführen.

5. Datenbank nach einem der Ansprüche 1 bis 4,
**dadurch gekennzeichnet, daß** ausschließlich Mittel auf einer zentralen Systemverwaltungsebene für diese Datenbank für die Definierung einer neuen Nutzeridentität und eines Paßwortes vorgesehen sind.

6. Datenbank nach Anspruch 5,
**gekennzeichnet durch** Mittel zum Generieren der Anwendungs/Nutzer-Identität für jede einem Nutzer zugewiesene Rolle, wobei bestimmte Rollen, nur in Bezug auf bestimmte Datenbankanwendungen, Zugriffsrechte einschließen können, die im Normalbetrieb der Datenbank für die Systemverwaltungsebene reserviert sind.

7. Datenbank nach einem vorangehenden Anspruch,
**dadurch gekennzeichnet, daß** die Datenbank für die Verwendung von SQL als Prozedursprache ausgelegt ist.

8. Datenbank nach einem vorangehenden Anspruch, **gekennzeichnet durch** Mittel zum Hemmen der Command-Operation.

9. Datenbank nach einem vorangehenden Anspruch,
**dadurch gekennzeichnet, daß** der erste und zweite Dateiserver logisch getrennte Einheiten sind, die auf derselben Hardware operieren.

10. Datenbank nach einem vorangehenden Anspruch,
**dadurch gekennzeichnet, daß** der erste und zweite Dateiserver auf physisch getrennter Hardware laufen.

11. Computernetzwerk mit zentraler Prozessoreinrichtung, enthaltend einen ersten Dateiserver (SQL-Server) auf dem eine Datenbank gespeichert ist, einen zweiten Dateiserver (Open Server) für die Vorbereitung von Datenbankanwendungen und Prozeduren, und eine Anzahl von Terminalgeräten (Klient), mit denen auf die Datenbank zugegriffen werden kann,
**dadurch gekennzeichnet, daß** Nutzerrechte für die Datenbank auf jeden Nutzer individuell zugeschnitten sind bezüglich der Daten und der Datenbankfunktionen, daß der Zugriff zu der Datenbank durch eine doppelte Einlogg-Prozedur gesteuert wird, und daß ein erster Schritt der doppelten Einlogg-Prozedur von einem Nutzer durchgeführt wird, indem er eine Nutzer-Identität und Paßwort eingibt, und daß für jede von dem Benutzer durchgeführte Datenbankanwendung dem ersten Dateiserver zugeordnete Mittel vorgesehen sind zum Generieren einer für den Nutzer und die Anwendung spezifische Anwendungs/Nutzer-Identität zusammen mit einem zugeordneten Paßwort, und daß die Anwendungs/Nutzer-Identität und das Paßwort vor dem Nutzer verborgen werden, und daß das Computernetzwerk zweite Mittel aufweist, um der Anwendungs/Nutzeridentität Zugriffsrechte zu geben, um notwendige Funktionen der jeweiligen Anwendung in Abhängigkeit von den Zugriffsrechten des Nutzers durchzuführen.

12. Computernetzwerk nach Anspruch 1,
**dadurch gekennzeichnet, daß** die Anwendungs/Nutzer-Identität, das zugeordnete Paßwort und die Liste von Zugriffsrechten in einem Cache-Speicher in dem ersten Dateiserver gespeichert werden.

13. Computernetzwerk nach Anspruch 12,
**dadurch gekennzeichnet, daß** das Computernetzwerk dritte Mittel aufweist zum Zugreifen auf den Cache-Speicher jedesmal dann, wenn ein eingeloggter Nutzer eine neue Aufgabe unternimmt, und zum Feststellen ob eine bestimmte Datenbankfunktion, oder Daten, für die neue Aufgabe verfügbar gemacht werden können oder nicht.

14. Computernetzwerk nach einem der Ansprüche 11 bis 13,
**dadurch gekennzeichnet, daß** ausschließlich Mittel auf einer zentralen Systemverwaltungsebene für die Datenbank vorgesehen sind, um eine neue Nutzeridentität und ein neues Paßwort zu definieren.

15. Computernetzwerk nach Anspruch 14, **gekennzeichnet durch** Mittel zum Erzeugen der Anwendungs/Nutzer-Identität für jede einem Nutzer zugeordnete Rolle, wobei bestimmte Rollen, ausschließlich bezüglich bestimmter Datenbankanwendungen, Zugriffsrechte einschließen können, die beim Normalbetrieb der Datenbank für eine Systemverwaltungsebene reserviert sind.

16. Computernetzwerk nach einem der Ansprüche 11 bis 15,
**dadurch gekennzeichnet, daß** alle den Systemzugriff betreffenden Regeln und Prozeduren in dem ersten Dateiserver gespeichert sind.

17. Computernetzwerk nach einem der Ansprüche 11 bis 16, **gekennzeichnet durch** Mittel zum Hemmen der Command-Operation.

18. Computernetzwerk nach einem der Ansprüche 11 bis 17,
**dadurch gekennzeichnet, daß** der erste und zweite Dateiserver logisch getrennte Einheiten sind, die auf derselben Hardware operieren.

19. Computernetzwerk nach einem der Ansprüche 11 bis 18,
**dadurch gekennzeichnet, daß** der erste und zweite Dateiserver auf physisch getrennter Hardware laufen.

20. Verfahren für ein Computernetzwerk mit zentraler Prozessoreinrichtung, enthaltend einen ersten Dateiserver (SQL-Server), auf dem eine Datenbank gespeichert ist, einen zweiten Dateiserver (Open server) für die Vorbereitung von Datenbankanwendungen und Prozeduren und eine Anzahl von Terminalgeräten (Klient), über die auf die Datenbank zugegriffen werden kann, wobei das Verfahren den Zugriff zu der Datenbank steuert und **dadurch gekennzeichnet ist, daß** Nutzerrechte für die Datenbank auf jeden Nutzer bezüglich Daten und Datenbankfunktionen individuell zugeschnitten sind, und daß als ein erster Schritt des Einloggens in die Datenbank ein Nutzer eine Nutzeridentität und ein Paßwort eingibt, und daß für jede von dem Nutzer durchgeführte Datenbankanwendung der erste Dateiserver eine für den Nutzer und die Anwendung spezifische Anwendungs/Nutzer-Identität zusammen mit einem zugeordneten Paßwort generiert, und daß die Anwendungs/Nutzer-Identität und das Paßwort vor dem Nutzer verborgen werden, und daß eine Liste von Zugriffsrechten, die der Anwendungs/Nutzer-Identität zuzuordnen sind, abgeleitet wird, indem auf dem ersten Dateiserver eine auf dem zweiten Dateiserver vorbereitete Prozedur durchgeführt wird.

21. Verfahren nach Anspruch 20,
**dadurch gekennzeichnet, daß** die Anwendungs-Nutzer-Identität, das zugeordnete Paßwort und die Liste von Zugriffsrechten in einem Cache-Speicher auf dem ersten Dateiserver gespeichert werden.

22. Verfahren nach Anspruch 21,
**dadurch gekennzeichnet, daß** jedesmal dann, wenn ein eingeloggter Nutzer eine neue Aufgabe unternimmt, auf den Inhalt des Cache-Speichers zugegriffen wird, um festzustellen, ob eine bestimmte Datenbankfunktion oder Daten für die neue Aufgabe verfügbar gemacht werden können oder nicht.

23. Verfahren nach einem der Ansprüche 20 bis 22,
**dadurch gekennzeichnet, daß** eine neue Nutzeridentität und ein neues Paßwort nur auf einer zentralen Administrationsebene für die Datenbank definiert werden können.

24. Verfahren nach Anspruch 23,
**dadurch gekennzeichnet, daß** die Anwendungs/Nutzer-Identität für jede einem Nutzer zugeordnete Rolle generiert wird, und daß bestimmte Rollen lediglich bezüglich bestimmter Datenbankanwendungen, Zugriffsrechte enthalten können, die im Normalbetrieb der Datenbank für eine Systemverwaltungsebene reserviert sind.

25. Verfahren nach einem der Ansprüche 20 bis 24,
**dadurch gekennzeichnet, daß** alle sich auf den Systemzugriff beziehenden Regeln und Prozeduren in dem ersten Dateiserver gespeichert sind.

## Revendications

1. Base de données mémorisée sur un premier serveur (serveur SQL), à laquelle un grand nombre d'utilisateurs individuels (clients) a accès, dans laquelle il existe un niveau unique de gestion et dans laquelle des- limitations concernant les droits des utilisateurs sont imposées en ce qui concerne à la fois les données et les fonctions de la base de données, **caractérisée en ce que** ladite base de données est accessible au moyen d'une double procédure d'ouverture de séance dans laquelle un utilisateur entre son identité et son mot de passe et, pour chaque application de la base de données exécutée par ledit utilisateur, ledit premier serveur de fichiers est conçu de manière à générer une identité application/utilisateur spécifique audit utilisateur et à ladite application ainsi qu'un mot de passe associé, des moyens pour dissimuler ladite identité application/utilisateur et ledit mot de passe associé dudit utilisateur, ledit premier serveur de fichiers comprenant des moyens pour déduire une liste de droits d'accès destinés à être associés à ladite identité application/utilisateur en exécutant, sur ledit premier serveur de fichiers, une procédure préparée sur un second serveur de fichiers (serveur Ouvert).

2. Base de données selon la revendication 1, **caractérisée en ce que** ladite identité application/utilisateur, ledit mot de passe associé et ladite liste de droits d'accès sont mémorisés en mémoire cache sur ledit premier serveur de fichiers.

3. Base de données selon la revendication 2, **caractérisée par** des moyens pour, chaque fois qu'un utilisateur qui a ouvert une séance tente d'effectuer une nouvelle tâche, accéder au contenu de ladite mémoire cache de manière à déterminer si une fonction ou donnée particulière de la base de données peut être disponible ou non pour effectuer ladite nouvelle tâche.

4. Base de données selon l'une quelconque des revendications 1 à 3, **caractérisée en ce que** chaque utilisateur possède un rôle défini pour chaque application parmi un nombre sélectionné d'applications de base de données, lequel rôle permet audit utilisateur d'exécuter uniquement certaines fonctions qui sont définies pour cette application.

5. Base de données selon l'une quelconque des revendications 1 à 4, **caractérisée en ce que** seuls des moyens à un niveau de gestion du système central pour ladite base de données sont conçus pour définir de nouveaux mots de passe et identité d'utilisateur.

6. Base de données selon la revendication 5, **caractérisée par** des moyens pour générer ladite identité application/utilisateur pour chaque rôle attribué à un utilisateur, au moyen desquels certains rôles peuvent comprendre, en ce qui concerne certaines applications de base de données uniquement, des droits d'accès qui sont, lorsque la base de données fonctionne normalement, réservés au niveau de gestion du système.

7. Base de données selon l'une quelconque des revendications précédentes, **caractérisée en ce que** ladite base de données est conçue pour utiliser le langage SQL comme langage procédural.

8. Base de données selon l'une quelconque des revendications précédentes, **caractérisée par** des moyens pour inhiber le fonctionnement d'une commande.

9. Base de données selon l'une quelconque des revendications précédentes, **caractérisée en ce que** lesdits premier et second serveurs de fichiers sont des entités logiquement distinctes fonctionnant sur le même équipement physique.

10. Base de données selon l'une quelconque des revendications précédentes, **caractérisée en ce que** lesdits premiers et second serveurs de fichiers fonctionnent sur un équipement physiquement distinct.

11. Réseau informatique possédant des moyens de traitement centraux, comprenant un premier serveur de fichiers (serveur SQL), sur lequel est mémorisée une base de données, un second serveur de fichiers (serveur Ouvert) pour la préparation des applications et procédures de la base de données, et une pluralité d'équipements terminaux (Clients) grâce auxquels on peut accéder à ladite base de données, **caractérisé en ce que** les droits des utilisateurs, pour ladite base de données, sont uniquement adaptés à chaque utilisateur en ce qui concerne à la fois les données et les fonctions de la base de données, **en ce que** l'accès à ladite base de données est commandé par une double procédure d'ouverture de séance, et **en ce qu'**une première étape de la double procédure d'ouverture de séance est effectuée lorsqu'un utilisateur entre une identité et un mot de passe d'utilisateur, et **en ce que**, pour chaque application de la base de données exécutée par l'utilisateur, des moyens sont prévus, en association avec ledit premier serveur de fichiers, pour générer une identité application/utilisateur spécifique audit utilisateur et à ladite application ainsi qu'un mot de passe associé, et **en ce qu'**à la fois ladite identité application/utilisateur et ledit mot de passe sont dissimulés audit utilisateur, et **en ce que** le réseau informatique comprend des deuxième moyens pour fournir lesdits droits d'accès à 1' identité application/utilisateur pour exécuter les fonctions nécessaires de l'application particulière en fonction des droits d'accès dudit utilisateur.

12. Réseau informatique selon la revendication 1, **caractérisé en ce que** ladite identité application/utilisateur, ledit mot de passe associé et ladite liste de droits d'accès sont mémorisés en mémoire cache sur ledit premier serveur de fichiers.

13. Réseau informatique selon la revendication 12, **caractérisé en ce que** le réseau informatique comprend des troisièmes moyens pour accéder à ladite mémoire cache chaque fois qu'un utilisateur qui a ouvert une séance tente d'effectuer une nouvelle tâche, et pour déterminer si une fonction ou donnée particulière de la base de données peut être disponible ou non pour effectuer ladite nouvelle tâche.

14. Réseau informatique selon l'une quelconque des revendications 11 à 13, **caractérisé en ce que** seuls des moyens à un niveau de gestion du système central pour ladite base de données sont conçus pour définir de nouveaux mot de passe et identité d'utilisateur.

15. Réseau informatique selon la revendication 14, **caractérisé par** des moyens pour générer ladite identité application/utilisateur pour chaque rôle attribué à un utilisateur, au moyen desquels certains rôles peuvent comprendre, en ce qui concerne certaines applications de base de données uniquement, des droits d'accès qui sont, lorsque la base de données fonctionne normalement, réservés à un niveau de gestion du système.

16. Réseau informatique selon l'une quelconque des revendications 11 à 15, **caractérisé en ce que** tous les règlements et procédures concernant l'accès au système sont mémorisés sur ledit premier serveur de fichiers.

17. Réseau informatique selon l'une quelconque des revendications 11 à 16, **caractérisé par** des moyens pour inhiber le fonctionnement d'une commande.

18. Réseau informatique selon l'une quelconque des revendications 11 à 17, **caractérisé en ce que** lesdits premier et second serveurs de fichiers sont des entités logiquement distinctes fonctionnant sur le même équipement physique.

19. Réseau informatique selon l'une quelconque des revendications 11 à 18, **caractérisé en ce que** lesdits premier et second serveurs de fichiers fonctionnent sur un équipement physiquement distinct.

20. Procédé pour réseau informatique possédant des moyens de traitement centraux comprenant un premier serveur de fichiers (serveur SQL), sur lequel est mémorisé une base de données, un second serveur de fichiers (serveur Ouvert) pour la préparation des applications et des procédures de la base de données, et une pluralité d'équipements terminaux (Clients) grâce auxquels on peut accéder à ladite base de données, ledit procédé contrôlant l'accès à ladite base de données et, **caractérisé en ce que** les droits des utilisateurs, pour ladite base de données, sont uniquement adaptés à chaque utilisateur en ce qui concerne à la fois les données et les fonctions de la base de données, et **en ce que**, comme première étape d'ouverture de séance de ladite base de données, un utilisateur entre une identité et un mot de passe d'utilisateur, et pour chaque application de la base de données exécutée par ledit utilisateur, ledit premier serveur de fichiers génère une identité application/utilisateur spécifique audit utilisateur et à ladite application ainsi qu'un mot de passe associé, et **en ce qu'**à la fois ladite identité application/utilisateur et ledit mot de passe sont dissimulés audit utilisateur, et **en ce qu'**une liste de droits d'accès destinés à être associés à ladite identité application/utilisateur est déduite en exécutant, sur ledit premier serveur de fichiers, une procédure préparée sur ledit second serveur de fichiers.

21. Procédé selon la revendication 20, **caractérisé en ce que** ladite identité application/utilisateur, ledit mot de passe associé et ladite liste de droits d'accès sont mémorisés en mémoire cache sur ledit premier serveur de fichiers.

22. Procédé selon la revendication 21, **caractérisé en ce que**, chaque fois qu'un utilisateur qui a ouvert une séance tente d'effectuer une nouvelle tâche, l'accès au contenu de ladite mémoire cache est fourni pour déterminer si une fonction ou donnée particulière de la base de données est disponible ou non pour effectuer ladite nouvelle tâche.

23. Procédé selon l'une quelconque des revendications 20 à 22, **caractérisé en ce que** de nouveaux mot de passe et identité d'utilisateur peuvent être définis uniquement à un niveau de gestion du système central pour ladite base de données.

24. Procédé selon la revendication 23, **caractérisé en ce que** ladite identité application/utilisateur est générée pour chaque rôle attribué à un utilisateur et certains rôles peuvent comprendre, en ce qui concerne certaines applications de la base de données uniquement, des droits d'accès qui sont, lorsque la base de données fonctionne normalement, réservés à un niveau de gestion du système.

25. Procédé selon l'une quelconque des revendications 20 à 24, **caractérisé en ce que** tous les règlements et procédures concernant l'accès au système sont mémorisés sur ledit premier serveur de fichiers.
